# EUROPÄISCHE PATENTSCHRIFT

(11) **EP 1 306 527 B1**
(45) Veröffentlichungstag und Bekanntmachung des Hinweises auf die Patenterteilung: **02.01.2008**
(21) Anmeldenummer: 01125281.4
(22) Anmeldetag: 25.10.2001
(51) Int. Cl.: F01L 13/00, F01L 1/34, F01L 1/053, F01L 1/02, F02D 13/02

(54) **Dieselmotor mit variablem Kompressionsverhältnis**
Diesel engine with variable compression ratio
Moteur diesel à rapport de compression variable

(43) Veröffentlichungstag der Anmeldung: 02.05.2003
(73) Patentinhaber: Ford Global Technologies, LLC, Dearborn, MI 48126 (US)
(72) Erfinder: Phlips, Patrick Joseph, 50858 Köln (DE)
(74) Vertreter: Drömer, Hans-Carsten

(56) Entgegenhaltungen:
- US-A- 5 970 929
- US-A- 6 044 816
- US-A- 6 058 896
- US-B1- 6 209 516

## Beschreibung

Die Erfindung betrifft einen Dieselmotor mit variablem Kompressionsverhältnis, enthaltend mindestens eine Reihe von Zylindern mit mindestens einem Einlaßventil und mindestens einem Auslaßventil pro Zylinder, welche von einer Vorrichtung mit variabler Phasenverschiebung angesteuert werden, wobei für die mindestens eine Zylinderreihe mindestens zwei Nockenwellen für die Einlassventile der Zylinder vorhanden sind, wobei die erste Nockenwelle das Öffnen und die zweite Nockenwelle das Schließen der Einlassventile steuert, und wobei ferner die zweite Nockenwelle Mittel zur Phasenverschiebung enthält.

Ferner betrifft die Erfindung ein Verfahren zur Steuerung eines Dieselmotors mit einem Turbolader, wobei zur Variation des Kompressionsverhältnisses das Schließen mindestens eines Einlaßventils verzögert wird.

Das Kompressionsverhältnis eines Dieselmotors ist definiert als das Verhältnis des Zylindervolumens am unteren Totpunkt zum Zylindervolumen am oberen Totpunkt. Das für Dieselmotoren nach dem Stand der Technik eingestellte Kompressionsverhältnis stellt dabei einen Kompromiß unter verschiedenen Zielvorgaben dar. So ist für ein gutes Kaltstartverhalten des Dieselmotors ein hohes Kompressionsverhältnis mit einer entsprechenden Temperaturerhöhung des komprimierten Luft-Kraftstoff-Gemisches wünschenswert. Beim warmgelaufenen Motor sind dagegen geringere Kompressionsverhältnisse bevorzugt, da diese geringere mechanische Belastungen und reduzierte Verbrennungsgeräusche bei Volllast zur Folge haben.

Ferner konnte in Untersuchungen gezeigt werden, daß bei kleinen Lasten geringere Verbrennungstemperaturen, die durch hohe Raten gekühlten rezirkulierten Abgases erzeugt werden, einen rußfreien, geräuscharmen Betrieb mit sehr geringen NOₓ-Emissionen gewährleisten. Die dabei auftretenden erhöhten Kohlenmonoxid- und Kohlenwasserstoff-Emissionen steigern die Aktivität des Oxidationskatalysators und halten diesen damit thermisch aktiviert. Ferner wird ein rußfreier fetter Betrieb des Motors ermöglicht, welcher die Reinigung der Stickoxidfalle erlaubt. Zur Erzeugung derartiger Betriebsbedingungen ist ebenfalls eine Veränderung des Kompressionsverhältnisses wünschenswert.

Nicht zuletzt angesichts zunehmend strengerer Emissionsvorschriften ist daher der Betrieb von Dieselmotoren mit veränderlichem Kompressionsverhältnis, das den jeweiligen Rahmenbedingungen angepaßt werden kann, wünschenswert. Zur Veränderung des Kompressionsverhältnisses ist es bekannt, das Verhältnis des Zylindervolumens am oberen Totpunkt zum Zylindervolumen am unteren Totpunkt des Kolbens zu verändern. Eine derartige Veränderung kann zum Beispiel durch eine Lageveränderung des Kolbens relativ zur Kurbelwelle oder eine komplette Verlagerung der Kurbelwelle relativ zum Motor erfolgen.

Aus der DE 198 14 800 ist eine variable Ventilsteuerung für eine Hubkolbenrennkraftmaschine, die mindestens ein Einlassventil und mindestens ein Auslassventil aufweist, bekannt. Zur Betätigung der Einlassventile und der Auslassventile ist eine Einlass-Auslass-Nockenwelle, auf der ein Einlass-Öffnet-Nocken zur Steuerung der Öffnungsfunktion des Einlassventils sowie ein Auslassnocken zur Steuerung des Auslassventils angeordnet. Weiterhin ist eine Einlass-Schliesst-Nockenwelle, auf der ein Einlass-Schliesst-Nocken zur Steuerung der Schliessfunktion des Einlassventils angeordnet ist, vorgesehen. Zur Übertragung der Stellbewegung des Einlass-Offnet-Nockens und des Einlass-Schliesst-Nockens auf das Einlassventil ist ein Einlass-Betätigungshebel vorgesehen. Zudem ist ein Auslass-Betätigungshebel zur Übertragung der Stellbewegung des Auslassnockens auf das Auslassventil sowie eine Einrichtung zur Änderung der Phasenlage zwischen den beiden Nockenwellen vorgesehen.

Die De 197 47 035 beschreibt eine variable Ventilsteuerung für Brennkraftmaschinen mit gemeinsam über zwei antriebsverbundene Nockenwellen erfolgender Ventilbetätigung, bei der die Öffnet- und die Schliesst-Funktion eines jeweiligen Ventiles über die Nocken jeweils einer anderen der beiden Nockenwellen gesteuert ist und die beiden Nockenwellen in ihrer Drehlage zueinander über ein Verstellgetriebe veränderbar sind. Das Verstellgetriebe liegt in der Antriebsverbindung von der einen zur anderen Nockenwelle und ist als vierrädriges Koppelgetriebe ausgebildet, von dessen Koppeln je eine koaxial zu einer der Nockenwellen gelagert ist und das über eine Stelleinrichtung mit einem Stellmotor und einem von diesem beaufschlagten, koaxial zu einer der Nockenwellen liegenden Stellglied verstellbar ist. Das Stellglied ist als Stellrad ausgebildet und wirkt mit einem über den Stellmotor angetriebenen Antriebsritzel zusammen, wobei das Stellrad und das Antriebsritzel mit dem Verstellgetriebe in einer Montageeinheit zusammengefasst sind.

Darüber hinaus ist es aus der US 6 209 516 B1 bekannt, das effektive Kompressionsverhältnis durch Änderung der Zeitsteuerung des Schließens der Einlaßventile des Dieselmotors zu variieren. Normalerweise liegt das Schließen der Einlaßventile (IVC: Inlet Valve Closing) kurz nach dem unteren Totpunkt (BDC: Bottom Dead Center) des Kolbens. Durch Verzögerung des IVC wird die effektive Kompression vom IVC bis zum oberen Totpunkt (TDC) reduziert. Gemäß der US 6 209 516 B1 wird als Mechanismus zur Verzögerung des IVC die Phasenverschiebung einer das Öffnen und Schließen der Einlaßventile steuernden Nockenwelle vorgeschlagen. Nachteilig hieran ist jedoch, daß das Öffnen des Einlaßventils ebenfalls verzögert wird, was sich ungünstig auf den Motorbetrieb auswirkt.

Vor diesem Hintergrund war es Aufgabe der vorliegenden Erfindung, ein kostengünstiges, kompaktes und für Personenkraftwagen mit Dieselmotor geeignetes System zur Veränderung des Kompressionsverhältnisses bereitzustellen.

Diese Aufgabe wird durch einen Dieselmotor mit den Merkmalen des Anspruchs 1 gelöst. Vorteilhafte Ausgestaltungen sind in den Unteransprüchen enthalten.

Der erfindungsgemäße Dieselmotor läßt sich mit variablem Kompressionsverhältnis betreiben und enthält mindestens eine Reihe von Zylindern, wobei jeder Zylinder mindestens ein Einlaßventil und mindestens ein Auslaßventil aufweist. Der Dieselmotor ist dadurch gekennzeichnet, daß ein Turbolader und eine mit den Mitteln zur Phasenverschiebung gekoppelte Motorsteuerung vorgesehen sind, wobei die Motorsteuerung dahingehend ausgebildet ist, die Verzögerung des Schließens der Einlaßventile in Abhängigkeit von der Motordrehzahl und/oder der Motorlast und/oder dem Ladedruck des Turboladers anzupassen.

Durch die Steuerung des Schließens der Einlaßventile (IVC) aller Zylinder einer Zylinderreihe über eine eigene, zweite Nockenwelle, die mit Mitteln zur Phasenverschiebung versehen ist, kann eine Verzögerung des Schließens der Einlaßventile eingestellt werden. Eine derartige Verzögerung bewirkt eine Reduzierung des effektiven Kompressionsverhältnisses beim Betrieb des Dieselmotors, was insbesondere bei warmgelaufenem Motor zur Reduzierung der Geräuschentwicklung und der Schadstoffemissionen ausgenutzt werden kann. Gleichzeitig gewährleistet die von der zweiten Nockenwelle separate erste Nockenwelle, daß das Öffnen der Einlaßventile unabhängig vom Schließen erfolgen kann. Mit einer Verzögerung des Schließens der Einlaßventile ist somit keine nachteilige Veränderung des Öffnens der Einlaßventile verbunden. Ferner hat der vorgeschlagene Dieselmotor einen verhältnismäßig einfachen Aufbau, da er auf kostengünstigen, kompakten mechanischen Bauelementen beruht.

Der Dieselmotor enthält eine Motorsteuerung, die mit den Mitteln zur Phasenverschiebung der zweiten Nockenwelle gekoppelt ist. Die Motorsteuerung ist erfindungsgemäß dazu eingerichtet, die Verzögerung des Schließens der Einlaßventile in Abhängigkeit von der Motordrehzahl, der Motorlast und/oder dem Ladedruck des Turboladers anzupassen. Insbesondere kann diese derart eingerichtet sein, daß die Verzögerung des Schließens der Einlaßventile bei geringer Motordrehzahl mit zunehmender Motorlast immer mehr verringert wird. Die Reduzierung des Kompressionsverhältnisses durch Verzögerung des Schließens der Einlaßventile hat als Nebeneffekt, daß sich das Motordrehmoment verringert, da das beim Schließen der Einlaßventile im Zylinder vorhandene Volumen reduziert wird. Bei einem Dieselmotor mit Turbolader kann bei höheren Motordrehzahlen, bei denen der Turbolader vollständig aktiv ist, die Auswirkung des reduzierten Kammervolumens beim Schließen der Einlaßventile durch einen höheren Ladedruck kompensiert werden. Dieser Ausgleich funktioniert jedoch nicht bei geringeren Motordrehzahlen, bei denen der Turbolader keinen ausreichenden Ladedruck produziert. Gemäß der vorgeschlagenen Ausgestaltung der Motorsteuerung wird diesem unerwünschten Nachlassen des Motordrehmoments dadurch begegnet, daß die Verzögerung des Schließens des Einlaßventils kontinuierlich variiert wird in Abhängigkeit von der Motordrehzahl, der Motorlast und/oder dem Ladedruck des Turboladers. Dabei kann bei geringen Motordrehzahlen und geringen Motorlasten das IVC zur Erzeugung einer ruhigen Verbrennung mit geringen Emissionen verzögert werden. Bei geringen Drehzahlen und Vollast wird dagegen das IVC weniger verzögert bzw. vorgezogen, um die volumetrische Effizienz und das Drehmoment zu maximieren. Bei Vollast und höheren Motordrehzahlen ist der Turbolader zunehmend in der Lage, höheren Ladedruck zu erzeugen, so daß das IVC im entsprechenden Maße schrittweise verzögert werden kann, um die mechanischen Belastungen und die Geräuschentwicklung zu reduzieren.

Die Mittel zur Phasenverschiebung der zweiten Nockenwelle sind vorzugsweise für eine Verzögerung des Schließzeitpunktes um bis zu 60° nach dem üblichen Einlaßschließen (IVC) eingerichtet. Ein derartiges Ausmaß der Verzögerung ist einerseits für die gewünschte Bandbreite des Kompressionsverhältnisses ausreichend und andererseits noch verhältnismäßig gut mit mechanischen Mitteln realisierbar. Ein Beispiel für einen derartigen Mechanismus ist bei Steffens (Steffens N. et al. (1997) Kontinuierliche Ein- und Auslaßnockenwellenverstellung für Klein- und Großserie, 6. Aachener Koll. Fahrzeug- und Motorentechnik, 1005 - 1024) beschrieben.

Gemäß einer bevorzugten Ausgestaltung sind die erste und die zweite Nockenwelle parallel und eng benachbart zueinander angeordnet. Auf diese Weise kann sichergestellt werden, daß beide Nockenwellen auf dieselben Einlaßventile einwirken können und dabei verhältnismäßig wenig Raum im Bereich des Dieselmotors beanspruchen. Die Antriebe, welche eine Drehung der ersten beziehungsweise zweiten Nockenwelle bewirken, sind vorzugsweise an gegenüberliegenden Enden der Nockenwellen angeordnet. Das heißt, daß der Antrieb für die erste Nockenwelle an einem ersten Ende dieser Nockenwelle und daß der Antrieb der zweiten, zur ersten parallelen Nockenwelle an demjenigen Ende oder zweiten Nockenwelle angeordnet ist, welches dem genannten ersten Ende der ersten Nockenwelle gegenüberliegt. Durch eine derartige Anordnung wird der an den beiden Enden der Nockenwellen vorhandene Raum optimal ausgenutzt.

Die erste Nockenwelle, welche das Öffnen der Einlaßventile steuert, kann bei einer speziellen Ausgestaltung des Dieselmotors gleichzeitig mit den Auslaßventilen gekoppelt sein, um auch deren Öffnen und/oder Schließen zu steuern. Auf diese Weise vereinfacht sich der Aufbau des Dieselmotors zusätzlich, da auf eine separate Nockenwelle für die Auslaßventile verzichtet werden kann.

Ferner betrifft die Erfindung ein Verfahren zur Steuerung eines Dieselmotors nach einem der Ansprüche 1 bis 6, wobei zur Variation des Kompressionsverhältnisses das Schließen mindestens eines Einlaßventils verzögert wird. Das Verfahren ist dadurch gekennzeichnet, daß bei geringer Motordrehzahl das Schließen der Einlaßventile mit zunehmender Motorlast weniger verzögert wird, um eine gleichbleibende Motorleistung zu gewährleisten. Bei diesem Verfahren wird in der vorstehend erläuterten Weise berücksichtigt, daß der Turbolader bei geringen Motordrehzahlen den Rückgang des Drehmoments durch eine verzögertes IVC nicht durch erhöhten Ladedruck kompensieren kann. Soll daher eine höhere Motorleistung erbracht werden, so wird die Verzögerung des IVC entsprechend zurückgenommen.

Die Erfindung wird nachfolgend anhand der Zeichnungen beispielhaft näher erläutert. Es zeigen:
- Figur 1: schematisch die Anordnung zweier Nockenwellen in einem erfindungsgemäßen Dieselmotor mit einer gemeinsamen Nockenwelle für Einlaß- und Auslaßventile;
- Figur 2: schematisch die Anordnung dreier Nockenwellen in einem erfindungsgemäßen Dieselmotor mit verschiedenen Nockenwellen für Einlaß- und Auslaßventile; und
- Figur 3: ein Zeitdiagramm für das variable Schließen der Einlaßventile bei einem erfindungsgemäßen Dieselmotor.

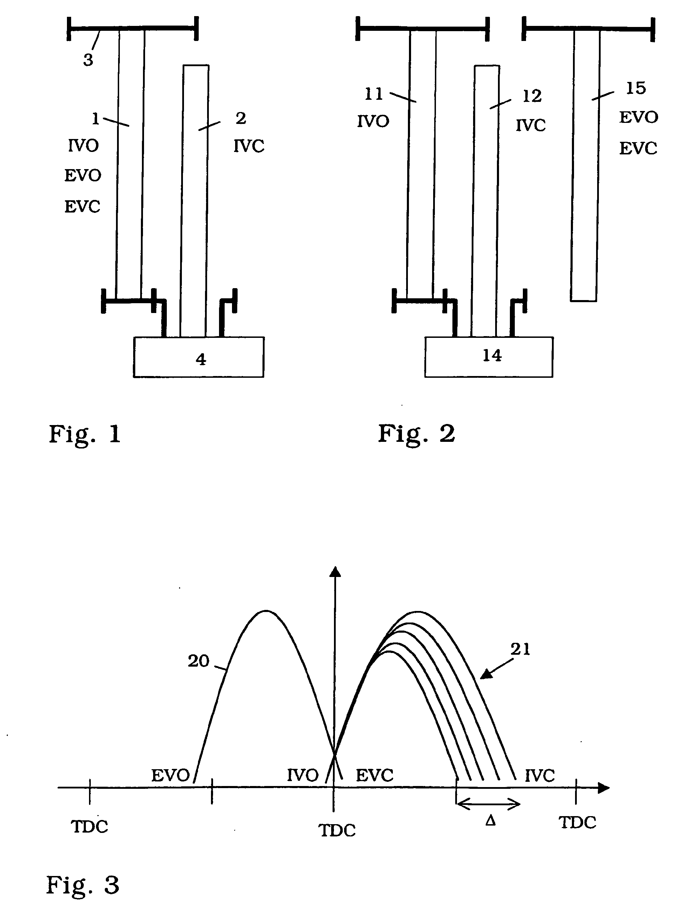

Figur 1 zeigt schematisch eine Aufsicht auf zwei Nockenwellen 1 und 2, welche einer Zylinderreihe eines (nicht näher dargestellten) Dieselmotors zugeordnet sind. Ein Dieselmotor ist dabei vorliegend gekennzeichnet durch ein hohes Kompressionsverhältnis (typischerweise 18 : 1 gegenüber 10 : 1 für fremdgezündete Motoren), eine späte Kraftstoffinjektion im Kompressionstakt, eine geschichtete Luft-Kraftstoff-Mischung im Zylinder und eine Selbstzündung. Die erste Nockenwelle 1 weist an ihrem in der Figur oberen Ende ein Zahnrad 3 oder dergleichen auf, welches von einer Kette, einem Riemen oder weiteren Zahnrädern angetrieben werden kann. An der Nockenwelle 1 sind Nocken (nicht dargestellt) angeordnet, welche im dargestellten Beispiel mit den Einlaßventilen und den Auslaßventilen der Zylinderreihe des Dieselmotors wechselwirken.

Bei herkömmlichen Dieselmotoren mit einer Nockenwelle für die Einlaß- und Auslaßventile würde dabei sowohl das Öffnen als auch das Schließen der Einlaßventile und der Auslaßventile von der einen Nockenwelle gesteuert. Erfindungsgemäß ist jedoch parallel und eng benachbart zur ersten Nockenwelle 1 eine zweite Nokkenwelle 2 angeordnet. Diese zweite Nockenwelle 2 steuert ausschließlich das Schließen der Einlaßventile (IVC). Die erste Nockenwelle 1 steuert demnach nur noch das Öffnen der Einlaßventile (IVO) sowie das Öffnen (EVO) und Schließen (EVC) der Auslaßventile.

Die zweite Nockenwelle 2 wird an ihrem in der Figur unteren Ende angetrieben, so dass ihr Antrieb demjenigen der ersten Nockenwelle 1 gegenüberliegt. Des weiteren ist zwischen der zweiten Nockenwelle 2 und ihrem Antrieb eine Einrichtung 4 zur Phasenverschiebung vorgesehen, welche typischerweise eine variable Phasenverschiebung der zweiten Nockenwelle 2 um bis zu 60° Kurbelwellenwinkel erlaubt. Eine Möglichkeit, wie das Öffnen und Schließen eines Ventils von zwei verschiedenen Nockenwellen, deren Phasen relativ zueinander verschoben werden können, gesteuert werden kann, ist zum Beispiel in der DE 43 22 480 C2 offenbart, auf welche ausdrücklich Bezug genommen wird. Andere Ausgestaltungen sind in der GB 170 855, der US 5 178 105 und der EP 0 472 430 B1 zu finden.

Figur 2 zeigt schematisch die Aufsicht auf eine alternative Ausgestaltung der Nokkenwellen eines Dieselmotors. Ausgangspunkt ist hier ein Stand der Technik, bei welchem für die Einlaßventile und die Auslaßventile einer Zylinderreihe zwei verschiedene Nockenwellen 11 beziehungsweise 15 vorgesehen sind. Die Nockenwelle 15 steuert dabei ausschließlich das Öffnen (EVO) und Schließen (EVC) der Auslaßventile. Anders als beim Stand der Technik steuert die erste Nockenwelle 11 jedoch nur das Öffnen der Einlaßventile (IVO), während ähnlich wie bei Figur 1 für das Schließen der Einlaßventile (IVC) parallel und eng benachbart zur ersten Nockenwelle 11 eine zweite Nockenwelle 12 vorgesehen ist. Deren Ankopplung und Steuerung mit einer Einrichtung 14 zur Phasenverschiebung ist ähnlich wie bei Figur 1, so daß auf eine erneute Beschreibung verzichtet werden kann.

Figur 3 zeigt in einem Diagramm die Möglichkeiten der Ventilsteuerung in einem erfindungsgemäßen Dieselmotor. Auf der horizontalen Achse ist dabei die Zeit aufgetragen, wobei jeweils die Punkte markiert sind, zu denen sich der Kolben am oberen Totpunkt (TDC) befindet. Auf der vertikalen Achse ist der Öffnungshub der Auslaßventile beziehungsweise Einlaßventile aufgetragen. Die Kurve 20 beschreibt dabei das Öffnungsverhalten eines Auslaßventils, während die Kurvenschar 21 zu einem Einlaßventil gehört. Aus der Darstellung ist erkennbar, daß die Zeitpunkte des Öffnens des Auslaßventils (EVO), des Schließens des Auslaßventils (EVC) sowie des Öffnens des Einlaßventils (IVO) unverändert sind, wobei die beiden zuletzt genannten Zeitpunkte kurz hinter beziehungsweise kurz vor dem oberen Totpunkt (TDC) liegen.

Mit Hilfe der vorstehend erläuterten Mittel 4, 14 zur Phasenverschiebung an den nur für das Schließen der Einlaßventile (IVC) zuständigen Nockenwellen 2 beziehungsweise 12 kann das Schließen der Einlaßventile in einem bestimmten Be-Δ von typischerweise 60° nach dem unteren Totpunkt variiert werden.

Eine derartige Variation des Schließens der Einlaßventile führt zu einer entsprechenden Veränderung des Kompressionsverhältnisses, welches somit optimal den Rahmenbedingungen (Kaltstart des Motors; warmgelaufener Motor, etc.) angepaßt werden kann. Hierdurch lassen sich die Geräuschentwicklung und die Schadstoffemissionen des Dieselmotors minimieren. Vorteilhafterweise bleiben dabei alle übrigen Schlüsselparameter EVO, EVC und IVO für die Zeitsteuerung der Einlaß- und Auslaßventile unverändert, so daß keine nachteiligen Nebeneffekte auf den Motorbetrieb auftreten.

## Patentansprüche

1. Dieselmotor mit variablem Kompressionsverhältnis, enthaltend mindestens eine Reihe von Zylindern mit mindestens einem Einlassventil und mindestens einem Auslassventil pro Zylinder, welche von einer Vorrichtung mit variabler Phasenverschiebung angesteuert werden, wobei für die Zylinderreihe zwei Nockenwellen für die Einlassventile vorhanden sind, wobei die erste Nockenwelle (1, 11) das Öffnen und die zweite Nockenwelle (2, 12) das Schließen der Einlassventile steuert, und wobei die zweite Nockenwelle Mittel (4, 14) zur Phasenverschiebung enthält; **gekennzeichnet durch** einen Turbolader sowie **durch** eine mit den Mitteln (4, 14) zur Phasenverschiebung gekoppelte Motorsteuerung, die dahingehend ausgebildet ist, die Verzögerung des Schließens der Einlassventile in Abhängigkeit von der Motordrehzahl, der Motorlast und/oder dem Ladedruck des Turboladers anzupassen.

2. Dieselmotor nach Anspruch 1,
**dadurch gekennzeichnet, dass**
die Mittel zur Phasenverschiebung (4, 14) für eine Verzögerung des Schließzeitpunktes (IVC) um bis zu etwa 60° nach dem üblichen IVC eingerichtet sind.

3. Dieselmotor nach Anspruch 1 oder 2,
**dadurch gekennzeichnet, dass**
die erste (1, 11) und die zweite Nockenwelle (2, 12) parallel und benachbart zueinander angeordnet sind.

4. Dieselmotor nach Anspruch 3,
**dadurch gekennzeichnet, dass**
die Antriebe der ersten (1, 11) und der zweiten Nockenwelle (2, 12) an gegenüberliegenden Enden der Nockenwellen angeordnet sind.

5. Dieselmotor nach einem der vorhergehenden Ansprüche,
**dadurch gekennzeichnet, dass**
die Motorsteuerung dahingehend ausgebildet ist, die Verzögerung des Schließens der Einlassventile bei geringer Motordrehzahl mit zunehmender Motorlast zu verringern, um eine gleich bleibende Motorleistung zu gewährleisten.

6. Dieselmotor nach einem der Ansprüche 1 bis 5,
**dadurch gekennzeichnet, dass**
die erste Nockenwelle (1, 11) auch die Auslassventile steuert.

7. Verfahren zur Steuerung eines Dieselmotors mit einem Turbolader nach einem der Ansprüche 1 bis 6, wobei zur Variation des Kompressionsverhältnisses das Schließen mindestens eines Einlassventils verzögert wird,
**dadurch gekennzeichnet, dass**
bei geringer Motordrehzahl das Schließen der Einlassventile mit zunehmender Motorlast weniger verzögert wird, um eine gleich bleibende Motorleistung zu gewährleisten.

## Claims

1. Diesel engine with a variable compression ratio, including at least one bank of cylinders with at least one inlet valve and at least one exhaust valve per cylinder, which are actuated by a device with a variable phase shift, wherein for the cylinder bank there are two camshafts for the inlet valves, the first camshaft (1, 11) controlling the opening and the second camshaft (2, 12) the closing of the inlet valves, and the second camshaft comprising phase-shift means (4, 14), **characterized by** a turbocharger and by an engine timing unit which is coupled to the phase-shift means (4, 14) and is designed in such a manner as to adapt the delay in closing of the inlet valves as a function of the engine speed, the engine load and/or the charging pressure of the turbocharger.

2. Diesel engine according to Claim 1, **characterized in that** the phase-shift means (4, 14) are designed to delay the closing time (IVC) by up to approximately 60° after the usual IVC.

3. Diesel engine according to Claim 1 or 2, **characterized in that** the first camshaft (1, 11) and the second camshaft (2, 12) are arranged parallel and adjacent to one another.

4. Diesel engine according to Claim 3, **characterized in that** the drives of the first camshaft (1, 11) and the second camshaft (2, 12) are arranged at opposite ends of the camshafts.

5. Diesel engine according to one of the preceding claims, **characterized in that** the engine timing unit is designed to reduce the delay in closing of the inlet valves at a low engine speed with an increasing engine load, in order to ensure a constant engine output.

6. Diesel engine according to one of Claims 1 to 5, **characterized in that** the first camshaft (1, 11) also controls the exhaust valves.

7. Method for controlling a diesel engine having a turbocharger according to one of Claims 1 to 6, in which to vary the compression ratio the closing of at least one inlet valve is delayed, **characterized in that** at a low engine speed the closing of the inlet valves is delayed to a lesser extent as the engine load increases, in order to ensure a constant engine output.

## Revendications

1. Moteur diesel ayant un taux de compression variable, comportant au moins une rangée de cylindres avec au moins une soupape d'admission et au moins une soupape d'échappement par cylindre, qui sont commandées par un dispositif à déphasage variable, dans lequel il est prévu pour la rangée de cylindres deux arbres à cames pour les soupapes d'admission, dans lequel le premier arbre à cames (1, 11) commande l'ouverture et le deuxième arbre à cames (2, 12) commande la fermeture des soupapes d'admission, et dans lequel le deuxième arbre à cames comporte des moyens de déphasage (4, 14), **caractérisé par** un turbocompresseur ainsi que par une commande de moteur couplée aux moyens de déphasage (4, 14), qui est conçue en vue d'adapter le retard de la fermeture des soupapes d'admission en fonction du régime du moteur, de la charge du moteur et/ou de la pression de suralimentation du turbocompresseur.

2. Moteur diesel selon la revendication 1, **caractérisé en ce que** les moyens de déphasage (4, 14) sont conçus pour un retard du point de fermeture (IVC) allant jusque 60° après le IVC usuel.

3. Moteur diesel selon la revendication 1 ou 2, **caractérisé en ce que** le premier (1, 11) et le deuxième (2, 12) arbres à cames sont disposés parallèlement et à proximité l'un de l'autre.

4. Moteur diesel selon la revendication 3, **caractérisé en ce que** les entraînements du premier (1, 11) et du deuxième (2, 12) arbres à cames sont disposés à des extrémités opposées des arbres à cames.

5. Moteur diesel selon l'une quelconque des revendications précédentes, **caractérisé en ce que** la commande de moteur est conçue pour réduire le retard de la fermeture des soupapes d'admission lorsque le régime du moteur est bas avec une charge de moteur croissante, afin de garantir une puissance constante du moteur.

6. Moteur diesel selon l'une quelconque des revendications 1 à 5, **caractérisé en ce que** le premier arbre à cames (1, 11) commande également les soupapes d'échappement.

7. Procédé de commande d'un moteur diesel avec un turbocompresseur selon l'une quelconque des revendications 1 à 6, dans lequel on retarde la fermeture d'un moins une soupape d'admission pour faire varier le taux de compression, **caractérisé en ce que** l'on retarde moins la fermeture des soupapes d'admission lorsque le régime du moteur est bas avec une charge de moteur croissante, afin de garantir une puissance constante du moteur.
